# FASCICULE DE BREVET EUROPEEN

(11) **EP 3 557 950 B1**
(45) Date de publication et mention de la délivrance du brevet: **28.10.2020**
(21) Numéro de dépôt: 19168578.3
(22) Date de dépôt: 11.04.2019
(51) Int. Cl.: H05B 39/04, H05B 45/10, H05B 45/50

(54) **PROCÉDÉ DE CONTRÔLE D'UN VARIATEUR**
VERFAHREN ZUR STEUERUNG EINES DIMMERS
METHOD FOR CONTROLLING A DIMMER

(30) Priorité: 20.04.2018 FR 1853523
(43) Date de publication de la demande: 23.10.2019
(73) Titulaire: Hager Controls, 67700 Saverne (FR)
(72) Inventeur: HELLMICH, Bernd, 76139 Karlsruhe (DE); STURTZER, Eric, 67500 Haguenau (FR); MULLER, Steve, 67250 Hoffen (FR)
(74) Mandataire: Cabinet Nuss

(56) Documents cités:
- FR-A1- 2 856 236
- US-A1- 2001 014 949
- US-A1- 2014 312 869
- Tomi Engdahl: "Light dimmer circuits", , 1 janvier 2004 (2004-01-01), XP055516049, Extrait de l'Internet: URL:http://www.ee.teihal.gr/labs/electroni cs/web/downloads/Light_dimmer_circuits.pdf [extrait le 2018-10-16]

## Description

La présente invention traite d'un procédé de contrôle d'un variateur, de préférence d'un variateur d'un bâtiment tertiaire et/ou résidentiel.

De tels variateurs comprennent en général un transistor et alimentent une charge lumineuse à l'aide d'un signal d'alimentation électrique obtenu par découpage d'un signal d'entrée périodique du variateur. Un rapport cyclique du découpage correspond à la durée de temps pendant laquelle, dans une demi-période du signal d'entrée observée, le transistor est fermé, divisé par la durée d'une demi-période du signal d'entrée. Un tel variateur est par exemple connu du document US 2014/312869 A1.

De tels variateurs peuvent servir à varier l'intensité lumineuse de la lumière émise par la charge lumineuse, y compris des lampes fluorescentes compactes et des lampes à diodes électroluminescentes, qui remplacent de nos jours dans une large mesure les ampoules à incandescence traditionnelles, notamment parce qu'elles consomment beaucoup moins d'énergie. L'alimentation variable des charges lumineuses s'effectue en pratique au moyen d'un signal de sortie découpé dans la phase selon un mode de découpage qui dépend de la nature de la charge, c'est-à-dire s'il s'agit d'une charge plutôt résistive, inductive ou capacitive.

A cet effet, les variateurs existants proposent en général l'un parmi deux modes de fonctionnement, c'est-à-dire un mode de fonctionnement dit de coupure à l'angle ou un mode de fonctionnement dit de conduction à l'angle. Un tel variateur est par exemple connu du document FR 2 856 236 A1. Dans le mode de coupure à l'angle, le variateur ferme le transistor à un instant du passage à zéro de la tension issue de la source de tension alternative et le transistor est ouvert, à un instant dans la demi-période suivant ledit passage à zéro. Dans le mode de conduction à l'angle, le variateur ouvre le transistor à un instant du passage à zéro de la tension issue de la source de tension alternative et le transistor est fermé, à un instant dans la demi-période suivant ledit passage à zéro. Dans les deux modes précités, le rapport cyclique correspond, dans une demi-période du signal d'entrée observée, à la durée pendant laquelle le transistor est fermé divisée par la durée de la demi-période. Plus le rapport cyclique est faible, moins la charge lumineuse est alimentée en énergie et moins elle émet de lumière.

Le document Thomas Engdahl : « Light dimmer circuits », XP055516049, divulgue notamment un procédé de pilotage d'un variateur faisant usage d'un mode de coupure à l'angle.

La surchauffe du variateur constitue un risque, qui peut mener jusqu'à la détérioration du variateur.

Il existe des variateurs comprenant un capteur de température permettant de mesurer la température du variateur. Ces variateurs mesurent la température à intervalles réguliers et comparent la température mesurée à un seuil de température prédéfini. Lorsque le seuil de température prédéfini est franchi, le rapport cyclique peut être réduit jusqu'à la coupure totale de la charge électrique, afin de réduire le risque de surchauffe.

La présente invention a pour but d'améliorer la gestion de la surchauffe du variateur, en particulier pour des charges lumineuses du type LED.

Le procédé de contrôle d'un variateur selon l'invention comprend, dans un premier mode dans lequel le découpage du signal d'entrée est effectué selon un mode de conduction à l'angle avec une pente de commutation initiale et un rapport cyclique initial, les étapes successives suivantes :
a) mesurer la température dans le variateur à l'aide du capteur de température ;
b) lorsque la température mesurée est supérieure à une température de fonctionnement maximale du variateur, passer à un deuxième mode de fonctionnement dans lequel le découpage du signal d'entrée est effectué selon un mode de coupure à l'angle.

Le procédé comprend en outre dans l'étape b), avant le passage au deuxième mode de fonctionnement, une étape consistant à vérifier si la charge lumineuse est compatible avec le mode de coupure à l'angle.

Le variateur comprend un capteur de température et un transistor, de préférence un transistor du type MOSFET.

Selon une possibilité, le procédé comprend, entre les étapes a) et b), en outre l'étape suivante :
al) lorsque la température mesurée est supérieure à la température de fonctionnement maximale du variateur, dans le premier mode de fonctionnement, effectuer le découpage du signal d'entrée avec une pente de commutation supérieure à la pente de commutation initiale.

Ainsi, la chaleur émise par le transistor lors de chaque commutation peut être réduite et le variateur peut continuer à alimenter la charge avec le rapport cyclique initial.

Selon une caractéristique additionnelle possible, l'étape a1) est réitérée jusqu'à ce que la pente de commutation ait atteint une pente de commutation maximale.

Selon une caractéristique additionnelle possible, dans l'étape b), la vérification de la compatibilité de la charge lumineuse avec le mode de coupure à l'angle est effectuée à l'aide des étapes suivantes :
b1) mesurer une tension résiduelle présente dans le transistor ;
b2) comparer la tension résiduelle à un seuil prédéterminé.

Selon une possibilité, le procédé comprend en outre une étape consistant à :
c) lorsque la température mesurée est supérieure à la température de fonctionnement maximale du variateur, réduire le rapport cyclique du découpage du signal.

Selon une caractéristique additionnelle possible du procédé, l'étape c) est uniquement effectuée lorsque la pente de commutation a atteint une pente de commutation maximale.

Selon une possibilité, le rapport cyclique inférieur au rapport cyclique initial est choisi uniquement dans le deuxième mode de fonctionnement.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 1 illustre un procédé de contrôle d'un variateur connu de l'art antérieur ;
la figure 2 montre le procédé de contrôle d'un variateur selon le mode de réalisation ;
la figure 3 représente des courbes de tension dans une charge lumineuse et dans un transistor du variateur.

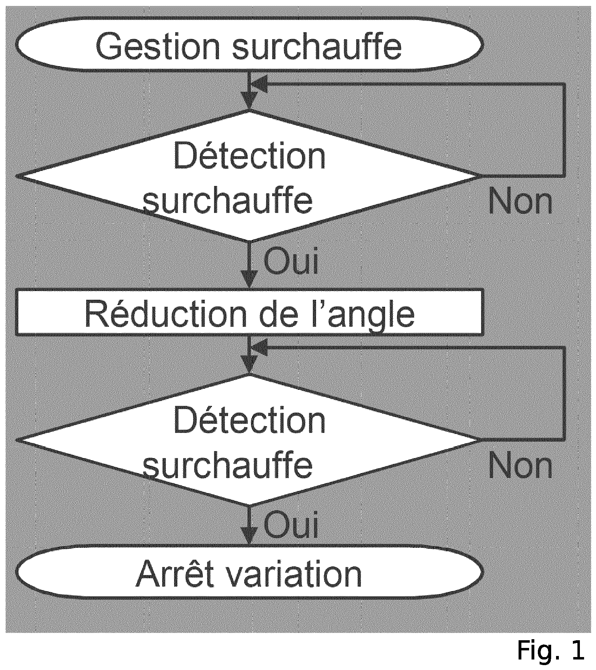

La figure 1 illustre un procédé de contrôle d'un variateur connu de l'art antérieur. Le variateur comprend un transistor et un capteur de température. Le variateur alimente en général une charge lumineuse à l'aide d'un signal d'alimentation électrique obtenu par découpage d'un signal d'entrée. Le capteur de température mesure la température à l'intérieur du variateur à intervalles de temps réguliers.

Dans un premier temps, lorsqu'une surchauffe du variateur est détectée, un rapport cyclique du variateur est réduit, c'est-à-dire qu'un angle de coupure est réduit. Cette réduction du rapport cyclique ou de l'angle de coupure peut aller jusqu'à l'arrêt total de la variation, c'est-à-dire la coupure de la charge lumineuse.

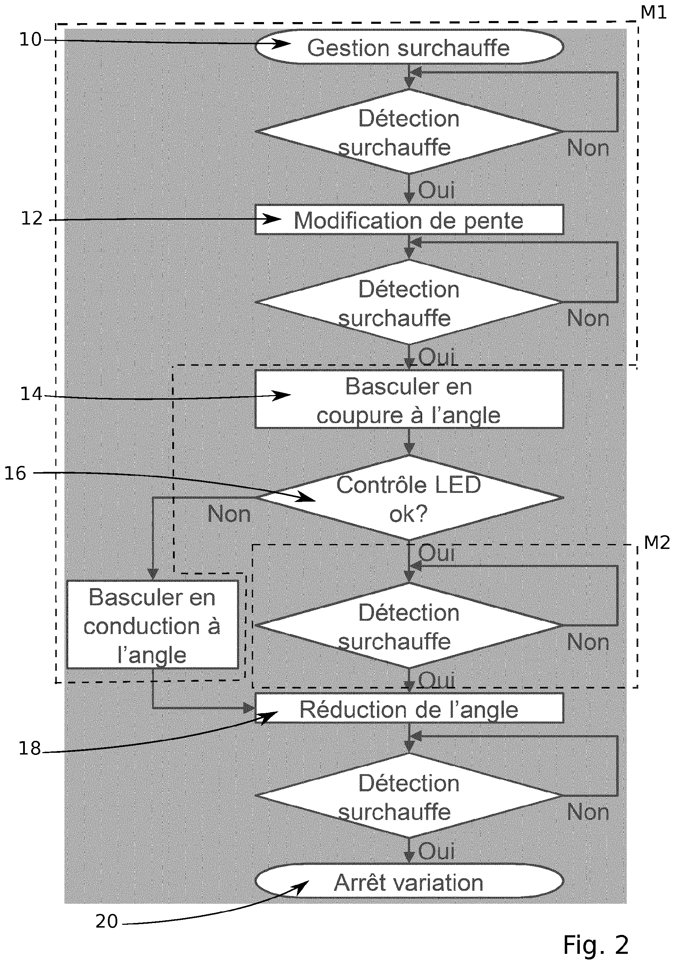

La figure 2 illustre un procédé de contrôle d'un variateur selon le mode de réalisation. Le procédé comprend, dans un premier mode M1 dans lequel le découpage du signal d'entrée est effectué selon un mode de conduction à l'angle avec une pente de commutation initiale et un rapport cyclique initial, les étapes successives suivantes :
a) mesurer la température dans le variateur à l'aide du capteur de température ;
b) lorsque la température mesurée est supérieure à une température de fonctionnement maximale du variateur, passer 14 à un deuxième mode M2 de fonctionnement dans lequel le découpage du signal d'entrée est effectué selon un mode de coupure à l'angle.

Le passage au deuxième mode de fonctionnement M2 dans lequel le découpage du signal d'entrée est effectué selon le mode de coupure à l'angle peut permettre de réduire l'émission de chaleur du variateur.

Le procédé peut, entre les étapes a) et b), en outre comprendre l'étape suivante :
al) lorsque la température mesurée est supérieure à la température de fonctionnement maximale du variateur, dans le premier mode de fonctionnement M1, effectuer 12 le découpage du signal d'entrée avec une pente de commutation supérieure à la pente de commutation initiale.

Ainsi, la température émise par le transistor lors de la commutation peut être réduite sans impacter la luminosité de la charge lumineuse.

L'étape a1) peut être réitérée jusqu'à ce que la pente de commutation ait atteint une pente de commutation maximale.

Cette pente de commutation maximale dépendra des performances du transistor.

Le procédé peut en outre comprendre, dans l'étape b), avant le passage au deuxième mode M2 de fonctionnement, une étape consistant à vérifier 16 si la charge lumineuse est compatible avec le mode de coupure à l'angle.

La vérification de la compatibilité de la charge lumineuse avec le mode de coupure à l'angle peut être effectuée à l'aide des étapes suivantes :
b1) mesurer une tension résiduelle présente dans le transistor ;
b2) comparer la tension résiduelle VR à un seuil prédéterminé (S).

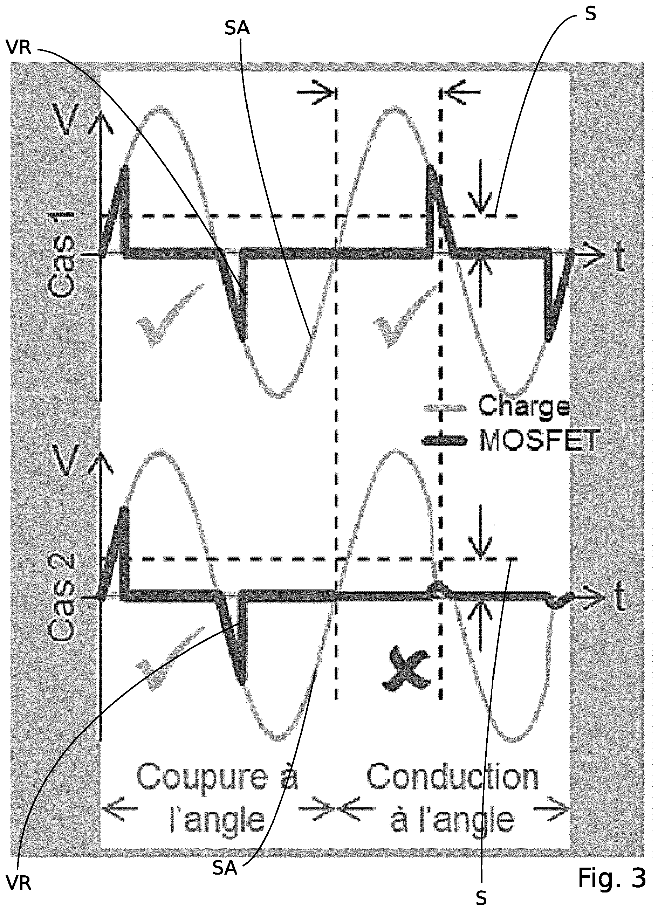

La figure 3 représente des courbes de tension dans la charge lumineuse et dans un transistor du variateur, c'est-à-dire le signal d'alimentation SA de la charge lumineuse et la tension résiduelle VR. Dans le cas représenté dans la figure 3, la pente de commutation est maximale. Lorsque la tension résiduelle VR est supérieure au seuil S, la charge pilotée par le variateur peut être détectée comme étant compatible avec le mode de coupure à l'angle. Ce cas est représenté en haut de la figure 3. Lorsque la tension résiduelle VR est inférieure au seuil S, la charge pilotée par le variateur peut être détectée comme étant incompatible avec le mode de coupure à l'angle. Ce cas est représenté en bas de la figure 3.

Le procédé peut en outre comprendre une étape consistant à :
c) lorsque la température mesurée est supérieure à la température de fonctionnement maximale du variateur, réduire 18 le rapport cyclique du découpage du signal.

Selon une possibilité, l'étape c) est uniquement effectuée lorsque la pente de commutation a atteint une pente de commutation maximale.

Selon une possibilité, le rapport cyclique inférieur au rapport cyclique initial est choisi uniquement dans le deuxième mode de fonctionnement.

Le procédé de pilotage selon le mode de réalisation permet une compatibilité avec des charges de type LED de plus en plus employées comme charges lumineuses. Le procédé de pilotage permet de rester dans le premier mode M1, dans lequel le découpage du signal d'entrée est effectué selon un mode de conduction à l'angle, tant qu'aucune surchauffe n'est effectuée et permet ainsi aux charges de type LED de fonctionner dans un mode à papillotements réduits. Le procédé de pilotage selon le mode de réalisation permet la compatibilité du variateur avec tout type de charge et une gestion de la surchauffe adaptive en fonction du type de la charge.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Procédé de contrôle d'un variateur comprenant un capteur de température et un transistor, de préférence un transistor du type MOSFET, le variateur alimentant une charge lumineuse à l'aide d'un signal d'alimentation électrique (SA) obtenu par découpage d'un signal d'entrée périodique du variateur, un rapport cyclique du découpage correspondant à la durée de temps pendant laquelle, dans une demi-période du signal d'entrée observée, le transistor est fermé, divisée par la durée d'une demi-période du signal d'entrée, procédé comprenant, dans un premier mode (M1) dans lequel le découpage du signal d'entrée est effectué selon un mode de conduction à l'angle avec une pente de commutation initiale et un rapport cyclique initial, l'étape suivante :
a) mesurer la température dans le variateur à l'aide du capteur de température ;
procédé **caractérisé par** les étapes suivantes :
b) lorsque la température mesurée est supérieure à une température de fonctionnement maximale du variateur, passer (14) à un deuxième mode (M2) de fonctionnement dans lequel le découpage du signal d'entrée est effectué selon un mode de coupure à l'angle.
et en ce qu'il comprend en outre, dans l'étape b), avant le passage au deuxième mode (M2) de fonctionnement, une étape consistant à vérifier (16) si la charge lumineuse est compatible avec le mode de coupure à l'angle.

2. Procédé de contrôle d'un variateur selon la revendication 1, **caractérisé en ce qu'**il comprend, entre les étapes a) et b), en outre l'étape suivante :
al) lorsque la température mesurée est supérieure à la température de fonctionnement maximale du variateur, dans le premier mode de fonctionnement (M1), effectuer (12) le découpage du signal d'entrée avec une pente de commutation supérieure à la pente de commutation initiale.

3. Procédé de contrôle d'un variateur selon la revendication 2, **caractérisé en ce que** l'étape a1) est réitérée jusqu'à ce que la pente de commutation ait atteint une pente de commutation maximale.

4. Procédé de contrôle d'un variateur selon l'une quelconque des revendications 1 à 3, **caractérisé en ce que**, dans l'étape b), la vérification de la compatibilité de la charge lumineuse avec le mode de coupure à l'angle est effectuée à l'aide des étapes suivantes :
b1) mesurer une tension résiduelle présente dans le transistor ;
b2) comparer la tension résiduelle (VR) à un seuil prédéterminé (S).

5. Procédé de contrôle d'un variateur selon l'une quelconque des revendications 1 à 4, **caractérisé en ce qu'**il comprend en outre une étape consistant à :
c) lorsque la température mesurée est supérieure à la température de fonctionnement maximale du variateur, réduire (18) le rapport cyclique du découpage du signal.

6. Procédé de contrôle d'un variateur selon la revendication 5 dépendante de la revendication 3, **caractérisé en ce que** l'étape c) est uniquement effectuée lorsque la pente de commutation a atteint la pente de commutation maximale.

7. Procédé de contrôle d'un variateur selon l'une quelconque des revendications 5 ou 6, **caractérisé en ce que** le rapport cyclique inférieur au rapport cyclique initial est choisi uniquement dans le deuxième mode de fonctionnement.

## Patentansprüche

1. Verfahren zur Steuerung eines Dimmers, einen Temperatursensor und einen Transistor umfassend, vorzugsweise einen Transistor vom Typ MOSFET, wobei der Dimmer eine Lichtquelle als Last mit Hilfe eines elektrischen Versorgungssignals (SA) versorgt, das durch Schneiden eines periodischen Eingangssignals des Dimmers erhalten wird, wobei ein Tastgrad des Schneidens der Zeitdauer entspricht, während derer in einer betrachteten Halbperiode des Eingangssignals der Transistor geschlossen ist, geteilt durch die Dauer einer Halbperiode des Eingangssignals, Verfahren, das in einer ersten Betriebsart (M1), in der das Schneiden des Eingangssignals in einer Phasenabschnitt-Betriebsart mit einer Anfangsschaltflankensteigung und einem anfänglichen Tastgrad des Schneidens erfolgt, den folgenden Schritt umfasst:
a) Messung der Temperatur im Dimmer mit Hilfe des Temperatursensors,
Verfahren, **gekennzeichnet durch** die folgenden Schritte:
b) Übergang (14) zu einer zweiten Betriebsart (M2), in der das Schneiden des Eingangssignals in einer Phasenanschnitt-Betriebsart erfolgt, wenn die gemessene Temperatur eine maximale Arbeitstemperatur des Dimmers überschreitet,
und **dadurch, dass** es außerdem im Schritt b) vor dem Übergang zur zweiten Betriebsart (M2) einen Schritt umfasst, der darin besteht zu prüfen (16), ob die Lichtquelle mit der Phasenanschnitt-Betriebsart kompatibel ist.

2. Verfahren zur Steuerung eines Dimmers nach Patentanspruch 1, **dadurch gekennzeichnet, dass** es zwischen den Schritten a) und b) außerdem den folgenden Schritt umfasst:
a1) Schneiden (12) des Eingangssignals in der ersten Betriebsart (M1) mit einer größeren Schaltflankensteigung als der Anfangsschaltflankensteigung, wenn die gemessene Temperatur eine maximale Arbeitstemperatur des Dimmers überschreitet.

3. Verfahren zur Steuerung eines Dimmers nach Patentanspruch 2, **dadurch gekennzeichnet, dass** der Schritt a1) wiederholt wird, bis die Schaltflankensteigung eine maximale Schaltflankensteigung erreicht hat.

4. Verfahren zur Steuerung eines Dimmers nach irgendeinem der Patentansprüche 1 bis 3, **dadurch gekennzeichnet, dass** im Schritt b) die Prüfung der Kompatibilität der Lichtquelle mit der Phasenanschnitt-Betriebsart mit Hilfe der folgenden Schritte erfolgt:
b1) Messung einer im Transistor bestehenden Restspannung,
b2) Vergleich der Restspannung (VR) mit einem festgelegten Schwellenwert (S).

5. Verfahren zur Steuerung eines Dimmers nach irgendeinem der Patentansprüche 1 bis 4, **dadurch gekennzeichnet, dass** es außerdem einen Schritt umfasst, darin bestehend:
c) den Tastgrad des Schneidens des Signals zu verringern (18), wenn die gemessene Temperatur höher ist als die maximale Betriebstemperatur des Dimmers.

6. Verfahren zur Steuerung eines Dimmers nach Patentanspruch 5 bei dessen Abhängigkeit vom Patentanspruch 3, **dadurch gekennzeichnet, dass** der Schritt c) nur ausgeführt wird, wenn die Schaltflankensteigung die maximale Schaltflankensteigung erreicht hat.

7. Verfahren zur Steuerung eines Dimmers nach irgendeinem der Patentansprüche 5 oder 6, **dadurch gekennzeichnet, dass** der Tastgrad des Schneidens kleiner als der anfängliche Tastgrad des Schneidens nur in der zweiten Betriebsart gewählt wird.

## Claims

1. Method for controlling a dimmer comprising a temperature sensor and a transistor, preferably a MOSFET-type transistor, the dimmer supplying a lighting load with power using an electrical power supply signal (SA) obtained by cutting of a input signal of the dimmer which is periodic, a duty cycle of the cutting corresponding to the length of time for which, in an observed half-cycle of the input signal, the transistor is closed, divided by the duration of a half-cycle of the input signal, which method comprises, in a first mode (M1) in which the cutting of the input signal is performed according to a leading-edge mode with an initial switching slope and an initial duty cycle, the following step:
a) Measuring the temperature in the dimmer using the temperature sensor;
which method is **characterized by** the following steps:
b) when the measured temperature is higher than a maximum operating temperature of the dimmer, changing (14) to a second operating mode (M2) in which the cutting of the input signal is performed according to a trailing-edge mode,
and in that it further comprises, in step b), before changing to the second operating mode (M2), a step consisting in checking (16) whether the lighting load is compatible with the trailing-edge mode.

2. Method for controlling a dimmer according to Claim 1, **characterized in that** it further comprises, between steps a) and b), the following step:
al) when the measured temperature is higher than the maximum operating temperature of the dimmer, in the first operating mode (M1), performing (12) the cutting of the input signal with a switching slope that is higher than the initial switching slope.

3. Method for controlling a dimmer according to Claim 2, **characterized in that** step a1) is reiterated until the switching slope has reached a maximum switching slope.

4. Method for controlling a dimmer according to any one of Claims 1 to 3, **characterized in that**, in step b), the checking of the compatibility of the lighting load with the trailing-edge mode is performed using the following steps:
b1) measuring a residual voltage present in the transistor;
b2) comparing the residual voltage (VR) with a predetermined threshold (S).

5. Method for controlling a dimmer according to any one of Claims 1 to 4, **characterized in that** it further comprises a step consisting in:
c) when the measured temperature is higher than the maximum operating temperature of the dimmer, decreasing (18) the duty cycle of the cutting of the signal.

6. Method for controlling a dimmer according to Claim 5 dependent on Claim 3, **characterized in that** step c) is only performed when the switching slope has reached the maximum switching slope.

7. Method for controlling a dimmer according to either of Claims 5 and 6, **characterized in that** the duty cycle lower than the initial duty cycle is chosen only in the second operating mode.
